# EUROPEAN PATENT SPECIFICATION

(11) **EP 1 030 802 B1**
(45) Date of publication and mention of the grant of the patent: **19.10.2005**
(21) Application number: 98956021.4
(22) Date of filing: 17.11.1998
(51) Int. Cl.: B62K 21/16

(54) **TRANSMISSION DEVICE AND MOVABLE STEERING ROD PROVIDED WITH SUCH A TRANSMISSION DEVICE**
ÜBERTRAGUNGSVORRICHTUNG UND EINSTELLBARER FAHRRADLENKER MIT EINER SOLCHEN VORRICHTUNG
TRANSMISSION ET BARRE MOBILE DE DIRECTION EQUIPEE DE CETTE TRANSMISSION

(30) Priority: 18.11.1997 NL 1007564
(43) Date of publication of application: 30.08.2000
(73) Proprietor: Batavus B.V., 8444 AR Heerenveen (NL)
(72) Inventor: ROOVERS, Gijsbertus, Cornelis, Franciscus, NL-5052 BA Goirle (NL); D'HERRIPON, Bastiaan, Andreas, NL-5051 NN Goirle (NL)
(74) Representative: Griebling, Onno
(86) International application number: PCT/NL1998/000658
(87) International publication number: WO 1999/025604

(56) References cited:
- EP-A- 0 092 811
- DE-A- 3 631 455
- FR-A- 867 888
- FR-A- 2 671 324
- US-A- 2 438 657

## Description

The present invention relates to a transmission device comprising at least two rotatable transmission components, each transmission component being provided with toothing arranged on at least part of the circumference of the transmission component, the respective toothings meshing with one another; a housing in which the transmission components are arranged; and a bearing for bearing the transmission components in the housing.

A transmission device of this kind is generally known. In the known transmission device, the transmission components are formed, for example, by toothed wheels which are mounted on rotary shafts, each rotary shaft being supported with the aid of bearings provided in the housing, so that the toothed wheels can rotate with ease.

A drawback of the known transmission device is that each rotary shaft has to be supported at least at two positions which are situated at a distance from one another, so that the structure is bulky and takes up a large amount of space. Moreover, it is very difficult to make the transmission device free of play.

An object of the present invention is to provide a transmission device which does not have these drawbacks.

To this end, the transmission device according to the invention is characterized in that at least part of the transmission components is in contact with the housing for the purpose of forming, together with the housing, the bearing, and in that means are provided for regulating, at least substantially eliminating, play between the toothings of the transmission components with respect to one another.

In this way no separate bearings are required, the toothed wheel assembly can be of very compact design and a rigid toothed wheel assembly which is free of play is obtained.

A transmission device with toothed transmission components is known per se from US-2,438,657. However, in this transmission device it is not possible to regulate or eliminate the play between the transmission components. Although the play between the housing and the transmission components can be eliminated, the aim of doing so is to generate a frictional force between the housing and the transmission components, so that rotation of the transmission elements is inhibited.

FR-867,888 has disclosed a transmission device in which the transmission components are mounted on removable shafts.

In a preferred embodiment of a transmission device according to the invention, the means for regulating the play between the toothing of the transmission components is formed by the housing, the shape of the housing being such that, if the transmission components are accommodated in the housing, the housing exerts a biasing force on the transmission components, with the result that the transmission components mesh with one another without play.

In a further preferred embodiment of a transmission device according to the invention, part of the circumference of a transmission component bears against part of the inner surface of the housing. In this way, the inner surface of the housing and that part of the circumference of the transmission components which bears against the inner surface form the bearing.

In another preferred embodiment of a transmission device according to the invention, the toothing of at least one transmission component extends over part of the circumference of the transmission component and the untoothed part of the circumference of the transmission component bears against the housing. The result is a larger contact area for forming the bearing, so that the transmission device is less susceptible to wear.

In order to reduce the friction between the transmission components and the housing, the inner surface of the housing is preferably provided with a friction-reducing lining, for example made of plastic.

Further preferred embodiments of the transmission device according to the invention are described in claims 6 - 12.

The invention furthermore relates to a steering assembly, in particular bicycle handlebars, as defined in claims 13 - 29 and to a bicycle which is provided with handlebars according to the invention.

The invention will be explained in more detail in the following text with reference to the attached drawing, in which:
Fig. 1 is a view of a transmission device according to the invention,
Fig. 2 is a view of a transmission device according to the invention in which each transmission component has an untoothed part,
Fig. 3 is a view of the transmission device in accordance with Fig: 2, which is provided with adjustment means for regulating the play between the transmission components,
Fig. 4 is a cross-sectional view of a transmission device according to the invention, in which the housing is provided on the inside with a lining,
Fig. 5 is a view, partially in section, of a transmission device according to the invention, in which the housing comprises two housing halves,
Fig. 6 is a view, partially in section, of another embodiment of a transmission device according to the invention, in which one transmission component partially tapers,
Fig. 7 is a view, partially in section, of a transmission device according to the invention, in which both transmission components taper,
Fig. 8 is cross-sectional view on line I-I in Fig. 9 of a transmission device according to the invention with conical bearing faces, the transmission device being arranged in a movable steering assembly,
Fig. 9 is a plan view of the transmission device of Fig 8, in which the top half of the housing has been removed,
Fig. 10 is a plan view of the transmission device of Fig. 8, in which a spacer is arranged between the transmission components,
Fig. 11 is a diagrammatic depiction, partially in section, of a movable steering assembly which is provided with a transmission device according to the invention,
Fig. 11a is a view, partially in section, of the transmission device with blocking mechanism of Fig. 11,
Fig. 12 is a view, partially in section, of a transmission device which is arranged in a movable steering assembly and is provided with a blocking device,
Fig. 13 is a bottom view of the steering assembly of Fig. 12,
Fig. 14 shows another embodiment of a blocking device,
Fig. 15 is a plan view of another embodiment of a blocking device,
Fig. 16 is a plan view of a movable steering assembly in the wide position with arm supports arranged on the transmission components,
Fig. 17 is a plan view of the steering assembly of Fig. 16 which has been rotated into a narrow position,
Fig. 18 is a view, partially in section, of a movable steering assembly attached to a steering-pivot pin, in which the steering assembly is attached rotatably to the steering-pivot pin and the handlebar parts are attached rotatably to the associated transmission components, and
Fig. 19 is a side view of the steering assembly of Fig. 18 in a number of positions.

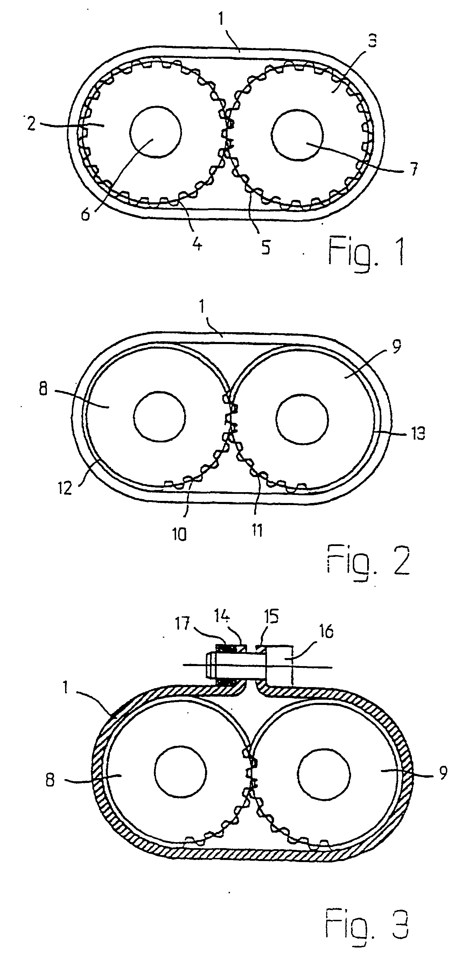

Fig. 1 shows a preferred embodiment of a transmission device according to the invention. Two transmission components, in the form of toothed wheels 2, 3, are arranged in a housing 1, so as to form a toothed-wheel assembly. Each toothed wheel 2, 3 has toothing 4, 5 on its circumference. The toothings 4, 5 mesh with one another. In the exemplary embodiment in question, the housing 1 comprises a band which surrounds the circumference of the toothed wheels 2, 3, so that a rigid structure is obtained. The toothed wheels bear, over an angle of 180°, against the inside of the housing 1. The contact area between the toothing 4, 5 of the toothed wheels 2, 3 and the inside of the housing 1 forms a sliding-contact bearing which allows the toothed wheels 2, 3 to rotate in the housing 1. The toothed wheels 2, 3 are fixedly connected to shafts 6, 7 which can be connected to drive means and/or components to be driven.

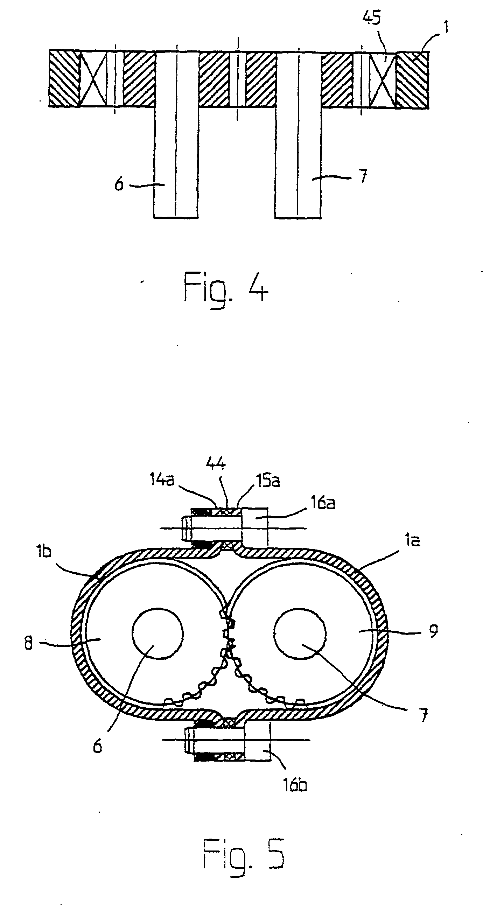

Fig. 2 shows a toothed wheel assembly with toothed wheels 8, 9, the toothing 10, 11 of which extends over part of the circumference. An untoothed part 12, 13 of each toothed wheel 8, 9 bears against the inside of the housing 1. The contact area between the toothed wheels 8, 9 and the housing 1 is increased in this way. The toothed wheels 8, 9 of the toothed wheel assembly of Fig. 2 can rotate through a limited angle, which angle corresponds to the length of the toothing on the circumference of the toothed wheels 8, 9. This toothed wheel assembly is suitable in particular for the synchronization of a rotational movement through a limited angle of two components which are connected to the toothed wheels 8, 9.

In order to facilitate mounting of the toothed wheels 8, 9 and to be able to eliminate play between the toothing of the toothed wheels 8, 9, which is caused by wear to the toothed wheels 8, 9 and between the toothed wheels 8, 9 and the housing 1, in a preferred embodiment of the toothed wheel assembly according to the invention as illustrated in Fig. 3 two flanged edges 14, 15 are provided, between which a gap is formed. The flanged edges 14, 15 can be moved towards one another by means of a bolt 16 and a nut 17, thus allowing play between the toothing of the toothed wheels 8, 9 and, at the same time, between the toothed wheels 8, 9 and the housing 1 to be eliminated. In this way, it is possible to allow the toothed wheels to mesh with one another without play and without the forces exerted on the toothing exceeding predetermined values. The toothed wheel assembly according to the invention in this way forms a very rigid and compact transmission.

In order to improve the sliding properties between the toothed wheels 2, 3, 8, 9 and the housing 1, a lining 45 may be provided on the inside of the housing 1 at the location of the contact surface between the toothed wheels 2, 3, 8, 9 and the housing 1. The lining 45 may be a plastic lining, for example a teflon lining. In the case of toothed wheels 8, 9 with an untoothed part 12, 13, the frictional resistance between the toothed wheels 8, 9 and the housing 1 can also be reduced by providing rolling bearings at the location of the contact surface between the toothed wheels 8, 9 and the housing 1.

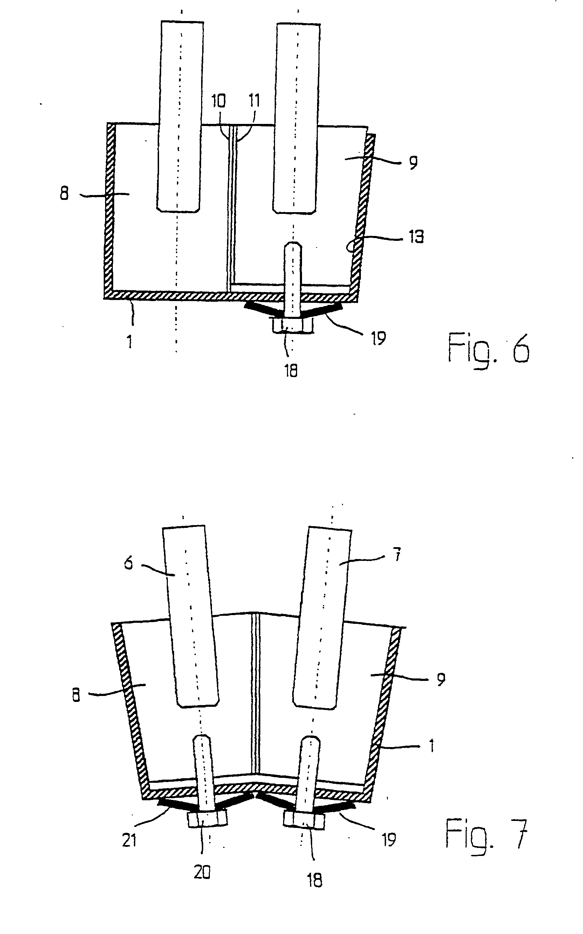

If it is necessary to accommodate the toothed wheels in a closed housing, the housing may be formed by two housing halves 1a, 1b, which can be pushed over the toothed wheels in the radial direction (cf. Fig. 5). Each housing half 1a, 1b is provided with a flanged edge 14a, 15a. A flexible seal 44 is positioned between the flanged edges 14a, 15a. The housing halves are drawn together by means of bolts 16a, 16b which project through the flanged edges 14a, 14b. Cutouts, through which the shafts 6, 7 project, are provided in the housing for the shafts 6, 7.

The dimensions of the toothed wheel assembly according to the invention are defined in the radial direction by the diameter of the constituent toothed wheels and in the axial direction by the forces which have to be transmitted by the toothing of one toothed wheel to the toothing of the other toothed wheel. When the toothed wheel assembly is used for synchronizing the rotational movement of two independent components, the forces can be disregarded and the toothed wheel assembly may be of very compact design.

In another preferred embodiment of a toothed wheel assembly according to the invention as depicted in Fig. 6, one of the toothed wheels tapers over part of the circumference. The untoothed part 13 of the toothed wheel 9 tapers. At the location of the contact surface between the toothed wheel 9 and the housing 1, the housing 1 is of complementary form.

With the aid of bolt 18, the toothed wheel 9 is pulled into the housing 1 until the toothings 10, 11 mesh with one another without play. The toothed wheel 9 is held in the housing 1 under a predetermined and controllable preloading by means of a spring ring 19. This immediately eliminates play resulting from wear.

In another embodiment of the toothed wheel assembly, the whole of each toothed wheel 8, 9 tapers (cf. Fig. 7). The housing 1 is of corresponding form and both toothed wheels 8, 9 are held in the housing 1 by means of bolts 18, 20 and spring rings 19, 21. The result is a rigid structure without play. The axes of the toothed wheels 8, 9 and the shafts 6, 7 which are connected to the toothed wheels are at an angle to one another.

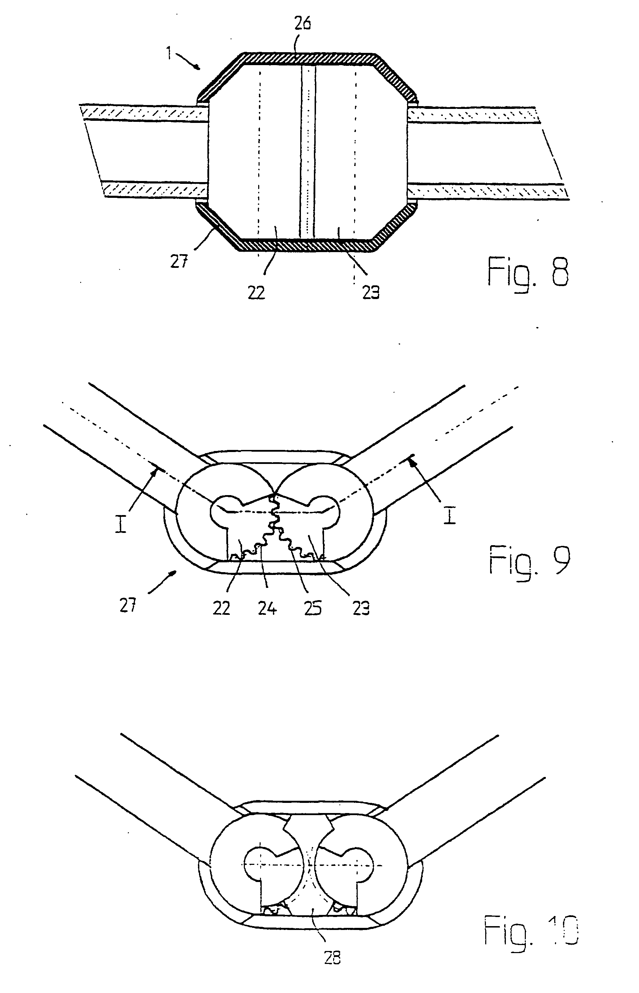

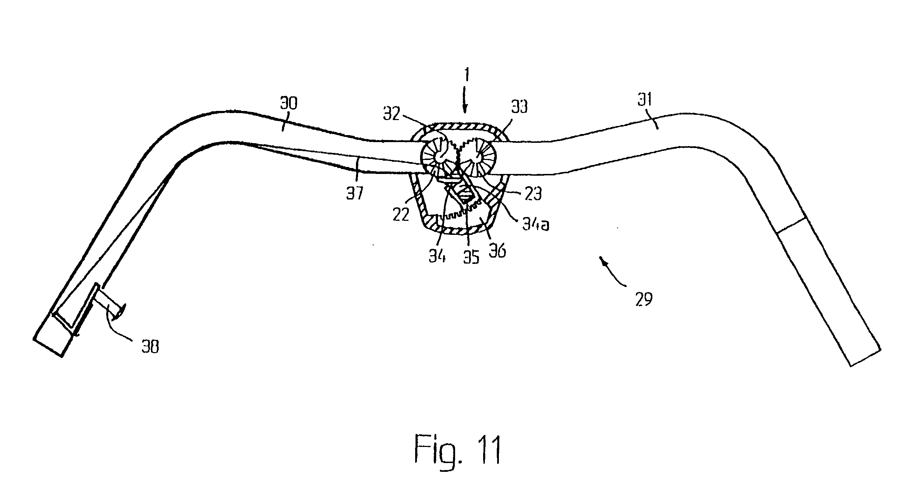

An advantageous embodiment of a toothed wheel assembly according to the invention which is intended for the synchronization of a rotational movement through a limited angle is illustrated in Fig. 8 and Fig. 9. Toothings 24, 25 extend over part of the circumference of the toothed wheels 22, 23. The untoothed part tapers at both axial ends of each toothed wheel 22, 23. The housing 1 is composed of two housing halves 26, 27, each housing half 26, 27 being placed over the toothed wheels 22, 23 on one axial side. The contact faces between the tapering axial ends of the toothed wheels 22, 23 and the correspondingly formed housing halves 26, 27 form the bearing for the toothed wheel assembly. A component is fixedly connected on each toothed wheel 22, 23 to the associated toothed wheel, axially in the centre and extending in the radial direction. By moving the housing halves 26, 27 towards one another, the housing halves 26, 27 exert forces on the toothed wheels 22, 23 which result in a force which causes the toothed wheels 22, 23 to be moved towards one another and to mesh correspondingly with one another without play. The components extend outwards through openings in the housing 1.

In order for the toothed wheel assembly to function optimally and to have a long service life, it is preferred for the toothed wheels to mesh with one another without play. However, if the toothings are pushed to far together, the teeth which are in engagement with one another exert a tangentially directed force on one another even in the rest position. This may ultimately cause fatigue in the toothing, which may lead to fracture. In order to prevent this, the toothed part of the toothed wheels may be omitted in the region of the axial ends and replaced by a substantially cylindrical part, so that a spacer 28 can be provided in the region of the axial ends of the toothed wheels (cf. Fig. 10). As a result, it is possible to set the distance between the toothed wheels with a high level of accuracy.

Fig. 11 shows a set of bicycle handlebars 29, each half of which can rotate about a corresponding axis of rotation 32, 33. In order to provide synchronous rotational movement of the handlebar halves 30, 31, a toothed wheel assembly according to the invention is arranged between the two handlebar halves 30, 31. The axes of the toothed wheels 22, 23 coincide with the axes of rotation 32, 33 of the handlebar halves 30, 31. In order to be able to hold the handlebar halves 30, 31 in predetermined positions, a blocking device is provided. Moreover, the blocking device prevents the handlebar halves from moving unexpectedly into a position which is not intended by the cyclist.

The blocking device as illustrated in Fig. 11a comprises an arm 34 which is fixedly connected to the toothed wheel 22. A locking element 35, which can pivot about a pivot pin 34a which is substantially perpendicular to the axis of rotation 32 is arranged at the free end of the arm 34. On the side remote from the toothed wheel 22, the locking element 35 has toothing. By means of the toothing, the locking element 35 can mesh with toothing of an insertion element 36 which is fixedly connected to the housing 1. The locking element 35 can be moved out of the locking position with the aid of a cable 37, which is connected to an actuation button 38 via a lever mechanism. The handlebar halves 30, 31 can now be moved to a different position and, when the actuating button 38 is released, can be blocked and retained in this position. The locking element 35 meshes with the insertion element 36 with the aid of a restoring spring (not shown). The cable 37 runs via a bore in the toothed wheel 22 and the inside of the handlebar half 30 to the actuating button 38. It is also possible for the locking element 35 to mesh directly with the toothing of one of the toothed wheels. The arm 34 is then fixedly connected to the housing 1.

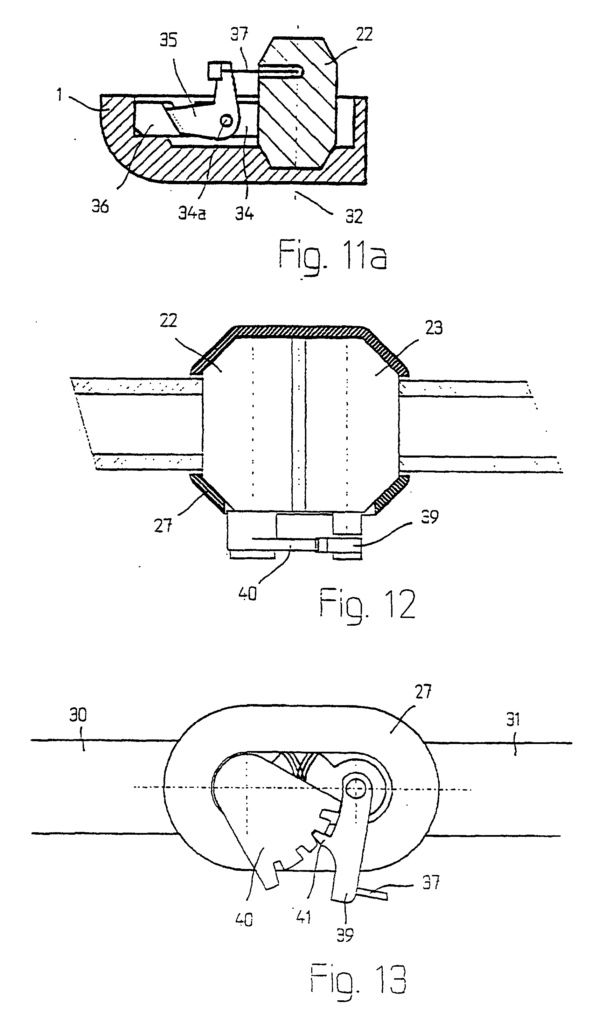

Fig. 12 shows another blocking device which is suitable for use in the toothed wheel assembly according to the invention. A locking element 39 is rotatably attached to the toothed wheel 23, the axis of rotation being coaxial with the axis of rotation of the toothed wheel 23. On the axial side of the toothed wheel 22, which lies in the same plane as the axial side of the toothed wheel 23 to which the locking element 39 is attached, an insertion element 40 is fixedly connected to the toothed wheel 22. As illustrated in Fig. 12, the insertion element 40 is integral with a pin which is connected coaxially and fixedly to the toothed wheel 22. The insertion element 40 is substantially fan-shaped. On the side facing the locking element 39, the insertion element 40 has a number of recesses. The locking element 39 has a projection 41, the shape of which corresponds to the shape of the recesses.

In this embodiment, the handlebar halves 30, 31 can be blocked in four different positions. The projection 41 can be pulled out of the recess in question with the aid of the cable 37, after which the handlebars can be adjusted to a different position. The projection 41 and the recesses in the insertion element 40 are shaped in such a manner that rotation of the two handlebar halves 30, 31 in one direction is blocked. By exerting a force on the handlebar halves 30, 31 in the other direction, the projection 41 is forced out of the recess in question due to the fact that one side of the recess in question and/or of the projection 41 is chamfered, and the handlebars can be moved to a different position. This continues until a limit position is reached. The handlebars can then only be restored to the original starting position by removing the projection out of the recess which defines the limit position with the aid of the cable 37, so that the handlebar halves 30, 31 can rotate freely.

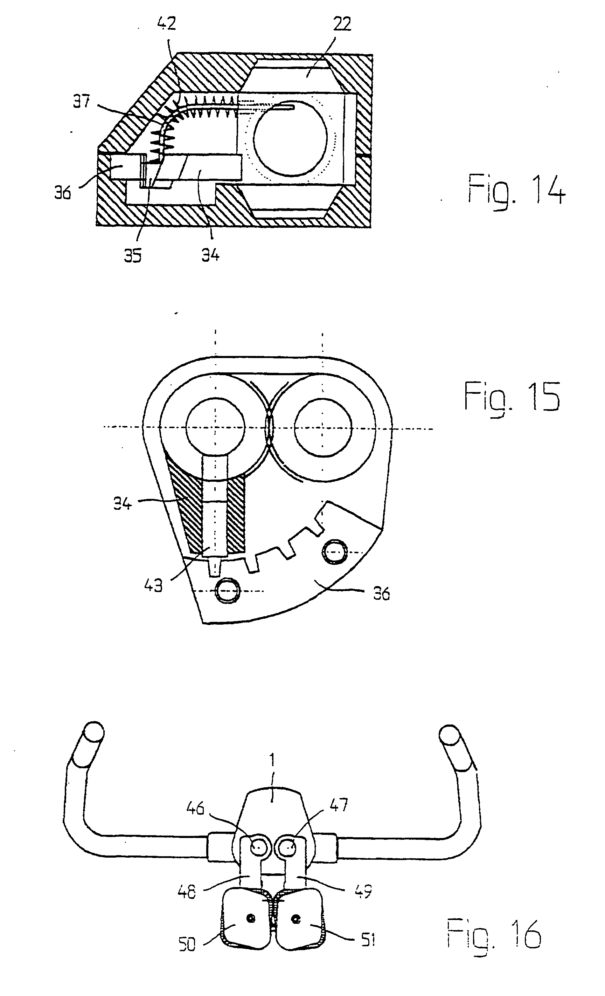

Fig. 14 shows another embodiment of a blocking device which is suitable for a toothed wheel assembly according to the invention. In this case, the arm 34 has a guide at its free end, into which guide the locking element 35 can be pushed. The toothing of the locking element 35 and the insertion element 36 is substantially parallel to the axis of the toothed wheel 22 to which the arm 34 is fixed. The direction of the guide on the free end of the arm 34 forms an angle with the direction of the toothing of the locking element 35 and the insertion element 36. If a tensile force is exerted on the locking element 35 by means of cable 37, the locking element 35 moves out of the toothing via the guide of the arm 34. The handlebars can then be moved into a different position. After the tensile force is removed, the locking element slides via the guide towards the toothing of the insertion element 36, and the locking element 35 is pressed back into the locking position by means of a spring 42.

Fig. 15 shows another embodiment of a blocking device. In the arm 34 there is arranged a bore in which a movable component 43, which is pressed outwards in the radial direction by means of a spring force, is arranged. A projection, which can be inserted into corresponding recesses in the insertion element 36, is situated on the outwardly directed end of the movable component 43. With the aid of a cable (not shown), the movable component 43 can be moved in a direction away from the insertion element and the projection is pulled out of the recess in question, so that the handlebars can be adjusted to a different position. In this embodiment too it is possible to form the recesses and the projection in such a manner that rotational movement of the handlebar halves in one direction is blocked, while it is possible in the other direction without actuating the actuating button, in which case it is necessary merely to overcome the friction between the toothed wheels and the housing.

Handlebars of this kind allow the cyclist to change his position easily while cycling from comfortable to sporting, during which adjustment it is not necessary to remove the hands, so that the cyclist can actuate the brakes and gears in any position of the handlebars and at all times.

The toothed wheel assembly according to the invention is particularly suitable for use in a movable set of bicycle handlebars which has to be lockable in two positions. The first position is a folded-out position which forms bicycle handlebars which are comparable to conventional handlebars. In the second position, the two handlebar halves are rotated towards one another as far as possible. The handlebar halves are preferably rotated in a direction in such a way that the free ends of the handlebar halves in the second position are situated next to one another and directed towards one another. This reduces the space taken up by a bicycle which is provided with movable handlebars of this kind and in which the movable handlebars have been placed in the second position. This is advantageous in particular for storing the bicycle in a bicycle shed.

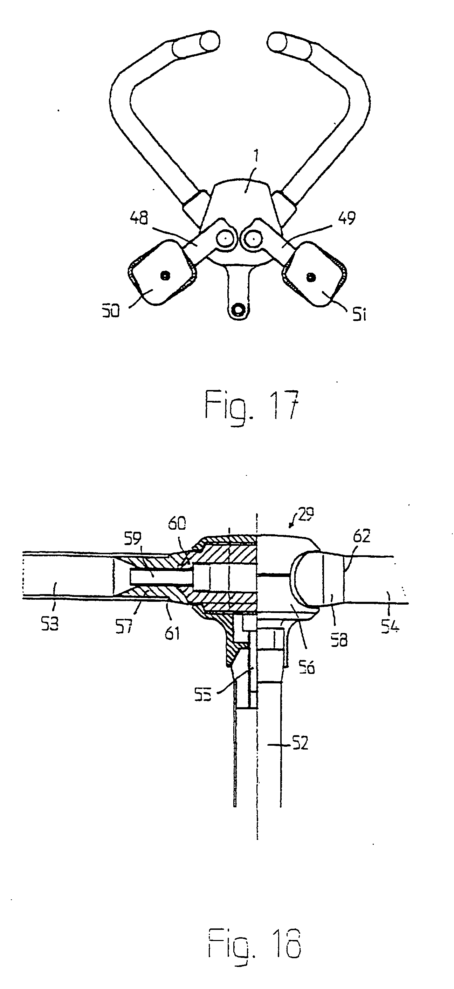

Fig. 16 shows another embodiment of handlebars which are provided with a toothed wheel assembly according to the invention. The handlebar halves can be rotated forwards, so that the handlebars are made narrower and the cyclist can reach further forwards. This provides a more aerodynamic and sporting position. Two shafts 46, 47 which are fixedly connected to the relevant toothed wheels project through openings in the housing 1, an arm 48, 49 being attached to each free end of the shafts 46, 47. A support component 50, 51 is arranged adjustably on each arm 48, 49. In the forward position of the handlebar halves, the cyclist can support himself with his forearms on the support components 50, 51. In the wide position of the handlebars, the support components 50, 51 are rotated against one another, so that the cyclist can place his hands against the housing. In the forward position of the handlebar halves (Fig. 17), the support arms 48, 49 are rotated laterally outwards, thus positioning the support components 50, 51 at a width which is such that the cyclist can comfortably place his forearms on the support components 50, 51.

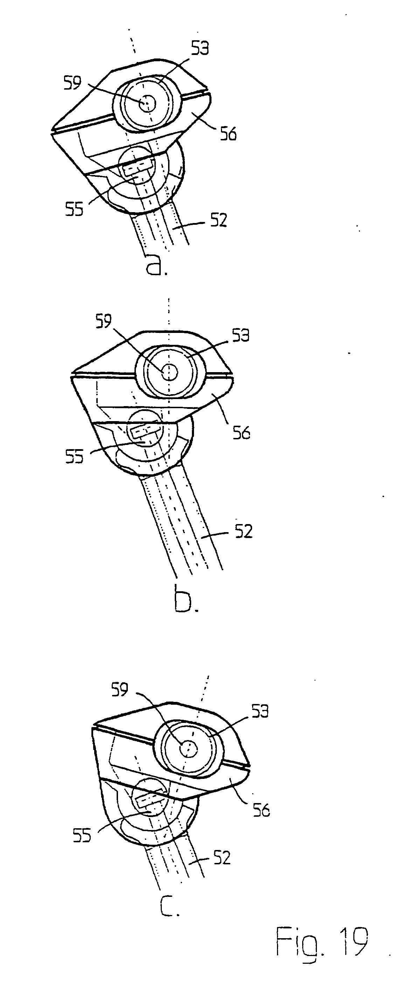

Fig. 18 shows handlebars 29 according to the invention which are attached rotatably to a steering-pivot pin 52 of a bicycle. In this case, the axis of rotation of the handlebars 29 is substantially perpendicular to the axis of the steering-pivot pin 52. Such a rotatable coupling between the steering-pivot pin 52 and the handlebars 29 allows the handlebars 29 to be tilted backwards and forwards. For this purpose, the steering-pivot pin 52 has a hollow cylindrical end, the axis of which is substantially perpendicular to the axis of the steering-pivot pin 52. In section, the steering-pivot pin 52 is trapezoidal at its end. The bottom housing half 56 of the toothed wheel assembly is provided with a part which is associated with the end of the steering-pivot pin 52 and can be placed over the end of the steering-pivot pin 52. In that part of the housing half 56 which is placed over the end of the steering-pivot pin 52 there is formed a slot through which a steering-pivot pin bolt 55 can be inserted. By tightening the steering-pivot pin bolt 55, the handlebars 29 are attached immovably to the steering-pivot pin 52.

In order to ensure that the handles of the handlebar halves 53, 54 are always in the correct position with respect to the user, the handlebar halves 53, 54 are attached rotatably to the toothed wheels of the toothed wheel assembly according to the invention. The toothed wheels of the toothed wheel assembly have an attachment cone 60 which extends radially outwards.

A connecting element 57, 58 is inserted into each handlebar half 53, 54. The connecting element 57, 58 is pressed into the handlebar half 53, 54, the edge of the free end of the handlebar part striking a shoulder 61, 62 of the connecting element 57, 58. That end of the connecting element which protrudes out of the handlebar half 53, 54 engages around the attachment cone 60 of the associated toothed wheel and, with the aid of a bolt 59, is pulled tight against the toothed wheel in question. If, by way of example, bolt 59 is unscrewed, handlebar half 53 can be rotated in such a manner that the handles on the free end of the handlebar half 53 move into the desired position. Handlebars of this kind can be used by every cyclist to set the optimum position.

Fig. 19 shows a side view of the attachment between the handlebars 29 and the steering-pivot pin. The housing of the toothed wheel assembly can "swing" back and forth over the end of the steering-pivot pin 52, so that the positions illustrated in Figure 19 as a, b and c can be reached.

The embodiments described above are given as nonlimiting examples. It will be clear to a person skilled in the art that various amendments and modifications to the exemplary embodiments are possible without departing from the scope of the invention as defined in the appended claims.

The handlebars according to the invention are suitable for both two-wheelers and three-wheelers. Moreover, the handlebars according to the invention are also suitable for motorized two-wheelers or three-wheelers, such as mopeds and motorbikes, in which it is desired to be able to adjust the handlebars.

Thus it is possible, for example, for the means for regulating the play between the toothing of the toothed wheels to be formed by the housing 1. In this case, the housing 1 is shaped in such a manner that the toothed wheels are clamped in the housing 1 under preloading. By suitably shaping the housing 1, the preloading with which the toothed wheels are clamped in the housing 1 can be controlled. The force which is generated by the preloading and engages on the toothed wheels is in this case directed in such a manner that the toothed wheels move towards one another in the radial direction. Therefore, wear to the toothing, which could cause play to arise, is immediately compensated for.

The preloading can be generated by the fact that the housing 1 undergoes an elastic deformation during the process of clamping in the toothed wheels. However, it is also possible, for example by designing the toothed wheels to be at least partially hollow, for the preloading to be generated by an elastic deformation of the toothed wheels, if they are clamped into a relatively rigid housing. In this way, it becomes unnecessary to provide additional spring means for generating the preloading. In terms of production engineering, this is very simple and therefore results in a considerable economic benefit.

Applying preloading in the toothed wheel assembly, which is used as a device for synchronizing the movements of the two handlebar halves, also means that the handlebar halves are less easy to rotate when the toothed wheel assembly is unlocked. Particularly if the locking occurs unexpectedly, it is desirable if the handlebar halves can only be rotated by exerting a force on both handlebar halves.

## Claims

1. Transmission device comprising:
at least two rotatable transmission components (2,3;8,9), each transmission component being provided with toothing (4,5;10,11) arranged on at least part of the circumference of the transmission component, the respective toothings meshing with one another;
a housing (1) in which the transmission components (2,3;8,9) are arranged; and
a bearing for bearing the transmission components (2, 3; 8, 9) in the housing,
**characterized in that** at least part of the transmission components (2, 3, 8, 9, 22, 23) is in contact with the housing (1) for the purpose of forming, together with the housing (1), the bearing, and **in that** means are provided for regulating, at least substantially eliminating, play between the toothings (10, 11) of the transmission components (2, 3, 8, 9, 22, 23) with respect to one another.

2. Transmission device according to claim 1, **characterized in that** the means for regulating the play between the toothing (10, 11) of the transmission components (2, 3, 8, 9, 22, 23) are formed by the housing (1), the shape of the housing (1) being such that, when the transmission components (2, 3, 8, 9, 22, 23) are accommodated in the housing (1), the housing (1) exerts a biasing force on the transmission components (2, 3, 8, 9, 22, 23), with the result that the transmission components (2, 3, 8, 9, 22, 23) mesh with one another without play.

3. Transmission device according to claim 1 or 2, **characterized in that** part of the circumference of each transmission component (2, 3, 8, 9, 22, 23) is in contact with part of the inner surface of the housing (1), the contact surfaces between each transmission component (2, 3, 8, 9, 22, 23) and the housing (1) forming the bearing.

4. Transmission device according to claim 1, 2 or 3, **characterized in that** the inner surface of the housing (1) is provided with a friction-reducing lining (45), for example made of plastic.

5. Transmission device according to one of claims 1 - 4, **characterized in that** the toothing of at least one transmission component (8, 9, 22, 23) extends over part of the circumference of the transmission component (8, 9, 22, 23), and **in that** an untoothed part of the circumference of the transmission component (8, 9, 22, 23) bears against the housing (1).

6. Transmission device according to claim 5, **characterized in that** a bearing segment is arranged in the housing (1) for the purpose of bearing the transmission component (8, 9, 22, 23).

7. Transmission device according to one of the preceding claims, **characterized in that** the means for regulating, at least substantially eliminating, the play between the toothing (10, 11) of the transmission components (2, 3, 8, 9, 22, 23) are also designed to regulate, at least substantially eliminate, play between the transmission components (2, 3, 8, 9, 22, 23) and the housing (1).

8. Transmission device according to one of the preceding claims, **characterized in that** the housing (1) comprises a band which bears at least partially against the circumference of the transmission components (2, 3, 8, 9) and on which two outwardly extending flanged edges (14, 15, 14a, 15a) are arranged, which flanged edges between them define a gap which runs substantially parallel to the axes of the transmission components (2, 3, 8, 9), it being possible to move the flanged edges (14, 15, 14a, 15a) towards one another by means of a bolt (16, 16a, 16b) for the purpose of adjusting play between the transmission components (2, 3, 8, 9), and between the transmission components (2, 3, 8, 9) and the housing (1).

9. Transmission device according to one of claims 1 - 7, **characterized in that** at least one transmission component (8, 9, 22, 23) tapers at the circumference, over a predetermined part, the tapering part bearing against a complementary part of the housing (1).

10. Transmission device according to claim 9, **characterized in that** at least one transmission component (8, 9) with a tapering part can be displaced by means of a bolt (18, 20) which protrudes through the housing (1) and engages on an internal screw thread in a bore in the transmission component (8, 9) in question, in such a manner that play between the transmission components (8, 9) can be eliminated.

11. Transmission device according to one of claims 1 - 7, **characterized in that** the housing (1) is composed of at least two parts, which can be moved towards one another.

12. Transmission device according to one of claims 1 - 11, **characterized in that** at least one spacer is arranged between the transmission components (2, 3, 8, 9, 22, 23).

13. Steering assembly, in particular bicycle handlebars (29) comprising at least two steering assembly parts (30, 31, 53, 54) and a transmission device according to one of claims 1-12, wherein each steering assembly part is connected to a transmission component of said transmission device.

14. Steering assembly according to claim 13, **characterized in that** each steering-assembly part (53, 54) is adjustably connected to the associated toothed wheel, it being possible to rotate the steering-assembly part (53, 54) around the axis of the steering-assembly part in question at the location of the connection.

15. Steering assembly according to claim 14, **characterized in that** each steering-assembly part (53, 54) is provided with a connecting element (57, 58) for adjustably connecting the steering-assembly part to the associated transmission component, the connecting element (57, 58) being inserted into the steering-assembly part, in such a manner that one end is situated outside the steering-assembly part, which end engages around an attachment cone (60) of the associated transmission component.

16. Steering assembly according to claim 15, **characterized in that** a bore provided with a screw thread is formed in the connecting element (57, 58), and **in that** a bore is formed in the attachment cone (60), through which bore it is possible to insert a bolt (59) which engages on the screw thread of the bore in the connecting element (57, 58).

17. Steering assembly according to one of claims 13-16, **characterized in that** blocking means are provided for blocking a rotational movement of a transmission component.

18. Steering assembly according to claim 17, **characterized in that** the blocking means are designed to block the rotational movement in one direction of rotation.

19. Steering assembly according to claim 17 or 18, **characterized in that** the blocking means comprise a locking element which engages on the toothing of at least one transmission component.

20. Steering assembly according to claim 17 or 18, **characterized in that** the blocking means comprise an insertion element (40) which is provided with recesses and is fixedly connected to a first transmission component, as well as a locking element (39) which is provided with a projection (41) and is rotatably attached to a second transmission component, in such a manner that the projection (41) can pass into one of the recesses.

21. Steering assembly according to claim 17 or 18, **characterized in that** the blocking means comprise an arm (34) which is fixedly connected to a transmission component, a locking element (35, 43) which is arranged displaceably on a free end of the arm and one side of which is provided with at least one projection, as well as an insertion element (36) which lies radially opposite the locking element, is arranged in the housing (1), is fixedly connected thereto and whose side facing towards the locking element (35, 43) is provided with recesses, in which the projection of the locking element (35, 43) can be inserted for the purpose of blocking the associated transmission component.

22. Steering assembly according to claim 21, **characterized in that** the locking element (35) is displaceable at an angle to the axis of rotation (32) of the associated transmission component, in a plane through the axis of rotation (32).

23. Steering assembly according to claim 21, **characterized in that** the locking element (35) is pivotable about a pin (34a) which is substantially perpendicular to the axis of the associated transmission component.

24. Steering assembly according to one of claims 20 - 23, **characterized in that** the projection (41) and/or the recesses are chamfered on one side, in such a manner that by exerting a force substantially in the direction of the chamfered side the locking element (39) moves out of a locking position.

25. Steering assembly according to one of claims 19 - 24, **characterized in that** a release spring (42) moves the locking element (35, 43) towards the insertion element (36).

26. Steering assembly according to one of claims 17 - 25, **characterized in that** an actuating member (38) is provided for moving the blocking means out of a blocking position.

27. Steering assembly according to one of claims 13 - 26, **characterized in that** an arm (48, 49) is attached to each transmission component, which arm (48, 49) forms an angle with the steering-assembly part which is connected to the transmission component in question, a support element (50, 51) being arranged on the free end of the arm (48, 49).

28. Steering assembly according to claim 27, **characterized in that** the support element (50, 51) is arranged adjustably on the free end of the arm (48, 49).

29. Steering assembly according to one of claims 13 - 28, **characterized in that** the steering assembly is fastened adjustably to a free end of a steering-pivot pin (52), it being possible for the steering assembly to rotate about an axis of rotation which is substantially perpendicular to the axis of the steering-pivot pin.

30. Bicycle provided with a steering assembly according to one of claims 13 - 29.

## Patentansprüche

1. Getriebevorrichtung mit
- mindestens zwei drehbaren Getriebeteilen (2, 3; 8, 9), die zumindest auf einem Teil ihres Umkreises jeweils mit einer Verzahnung (4, 5; 10, 11) versehen sind, wobei diese Verzahnungen miteinander in Eingriff stehen,
- einem Gehäuse (1), in dem die Getriebeteile (2, 3; 8, 9) angeordnet sind, sowie
- einem Lager zum Lagern der Getriebeteile (2, 3; 8, 9) im Gehäuse,
**dadurch gekennzeichnet,**
**dass** zumindest ein Teil der Getriebeteile (2, 3, 8, 9, 22, 23) das Gehäuse (1) berührt, um zusammen mit dem Gehäuse (1) das Lager zu bilden, und dass Mittel vorgesehen sind, mit denen sich das Spiel zwischen den Verzahnungen (10, 11) der Getriebeteile (2, 3, 8, 9, 22, 23) einstellen bzw. zumindest so gut wie beseitigen lässt.

2. Getriebevorrichtung nach Anspruch 1, **dadurch gekennzeichnet, dass** die Mittel zum Einstellen des Spiels zwischen den Verzahnungen (10, 11) der Getriebeteile (2, 3, 8, 9, 22, 23) durch das Gehäuse (1) gebildet sind, wobei dieses so geformt ist, dass es auf die Getriebeteile (2, 3, 8, 9, 22, 23) eine Vorbelastungskraft ausübt, wenn diese Getriebeteile (2, 3, 8, 9, 22, 23) im Gehäuse (1) angeordnet sind, wodurch die Getriebeteile (2, 3, 8, 9, 22, 23) ohne Spiel ineinander greifen.

3. Getriebevorrichtung nach Anspruch 1 oder 2, **dadurch gekennzeichnet, dass** ein Teil des Umkreises jedes Getriebeteils (2, 3, 8, 9, 22, 23) einen Teil der Innenfläche des Gehäuses (1) berührt, wobei die Berührungsflächen zwischen jedem Getriebeteil (2, 3, 8, 9, 22, 23) und dem Gehäuse (1) das Lager bilden.

4. Getriebevorrichtung nach Anspruch 1, 2 oder 3, **dadurch gekennzeichnet, dass** die Innenfläche des Gehäuses (1) mit einer reibungsreduzierenden Auskleidung, beispielsweise aus Kunststoff, versehen ist.

5. Getriebevorrichtung nach einem der Ansprüche 1 bis 4, **dadurch gekennzeichnet, dass** die Verzahnung mindestens eines Getriebeteils (8, 9, 22, 23) sich über einen Teil des Umkreises des Getriebeteils (8, 9, 22, 23) erstreckt und dass ein nicht verzahnter Teil des Umkreises des Getriebeteils (8, 9, 22, 23) am Gehäuse (1) anliegt.

6. Getriebevorrichtung nach Anspruch 5, **dadurch gekennzeichnet, dass** im Gehäuse (1) ein Lagersegment zum Lagern des Getriebeteils (8, 9, 22, 23) angeordnet ist.

7. Getriebevorrichtung nach einem der vorhergehenden Ansprüche, **dadurch gekennzeichnet, dass** die Mittel, mit denen sich das Spiel zwischen den Verzahnungen (10, 11) der Getriebeteile (2, 3, 8, 9, 22, 23) einstellen bzw. zumindest so gut wie beseitigen lässt, außerdem so ausgebildet sind, dass sich mit ihnen das Spiel zwischen den Getriebeteilen (2, 3, 8, 9, 22, 23) und dem Gehäuse (1) einstellen bzw. zumindest so gut wie beseitigen lässt,

8. Getriebevorrichtung nach einem der vorhergehenden Ansprüche, **dadurch gekennzeichnet, dass** das Gehäuse (1) einen Ring umfasst, der zumindest zum Teil am Umkreis der Getriebeteile (2, 3, 8, 9) anliegt und an dem nach außen ragende Flansche (14, 15, 14a, 15a) gebildet sind, die einen im Wesentlichen parallel zu den Achsen der Getriebeteile (2, 3, 8, 9) verlaufenden Spalt umgeben, wobei es möglich ist, die Flansche (14, 15, 14a, 15a) mittels einer Schraube (16, 16a, 16b) einander anzunähern, um das Spiel zwischen den Getriebeteilen (2, 3, 8, 9) sowie zwischen den Getriebeteilen (2, 3, 8, 9) und dem Gehäuse (1) einzustellen.

9. Getriebevorrichtung nach einem der Ansprüche 1 bis 7, **dadurch gekennzeichnet, dass** sich zumindest ein Getriebeteil (2, 3, 22, 23) am Umkreis über einen vorgegebenen Abschnitt hinweg verjüngt, wobei der sich verjüngende Abschnitt an einem komplementären Abschnitt des Gehäuses (1) anliegt.

10. Getriebevorrichtung nach Anspruch 9, **dadurch gekennzeichnet, dass** zumindest ein einen sich verjüngenden Abschnitt aufweisendes Getriebeteil (8, 9) mittels einer Schraube (18, 20), die durch das Gehäuse (1) hindurch ragt und in ein Innenschraubengewinde in einer Bohrung in diesem Getriebeteil (8, 9) eingreift, so bewegt werden kann, dass das Spiel zwischen den Getriebeteilen (8, 9) beseitigt wird.

11. Getriebevorrichtung nach einem der Ansprüche 1 bis 7, **dadurch gekennzeichnet, dass** sich das Gehäuse (1) aus zwei Teilen zusammensetzt, die einander angenähert werden können.

12. Getriebevorrichtung nach einem der Ansprüche 1 bis 11, **dadurch gekennzeichnet, dass** zwischen den Getriebeteilen (2, 3, 8, 9, 22, 23) mindestens ein Abstandshalter angeordnet ist.

13. Lenkung, insbesondere Fahrradlenker (29), mit mindestens zwei Lenkungsteilen (30, 31, 53, 54) und einer Getriebevorrichtung nach einem der Ansprüche 1 bis 12, bei der jedes Lenkungsteil mit einem Getriebeteil der Getriebevorrichtung verbunden ist.

14. Lenkung nach Anspruch 13, **dadurch gekennzeichnet, dass** jedes der Lenkungsteile (53, 54) mit dem zugehörigen Zahnrad einstellbar verbunden ist, wobei es möglich ist, das Lenkungsteil (53, 54) an der Verbindungsstelle um die Achse des betreffenden Lenkungsteils zu drehen.

15. Lenkung nach Anspruch 14, **dadurch gekennzeichnet, dass** jedes der Lenkungsteile (53, 54) mit einem Verbindungselement (57, 58) zum einstellbaren Verbinden des Lenkungsteils mit dem zugehörigen Getriebeteil versehen ist, wobei das Verbindungselement (57, 58) so in das Lenkungsteil eingeführt ist, dass sich ein Ende außerhalb des Lenkungsteils befindet und dieses Ende einen Befestigungskonus (60) des zugehörigen Getriebeteils umschließt.

16. Lenkung nach Anspruch 15, **dadurch gekennzeichnet, dass** im Verbindungselement (57, 58) eine Bohrung mit Schraubengewinde gebildet ist und dass im Befestigungskonus (60) eine Bohrung gebildet ist, durch die eine Schraube (59), die in das Schraubengewinde der Bohrung des Verbindungselements (57, 58) eingreift, hindurchgeführt werden kann.

17. Lenkung nach einem der Ansprüche 13 bis 16, **dadurch gekennzeichnet, dass** Blockiermittel zur Unterbindung einer Drehbewegung des Getriebeteils vorgesehen sind.

18. Lenkung nach Anspruch 17, **dadurch gekennzeichnet, dass** die Blockiermittel so ausgebildet sind, dass sie die Drehbewegung in einer Drehrichtung unterbinden.

19. Lenkung nach Anspruch 17 oder 18, **dadurch gekennzeichnet, dass** die Blockiermittel ein Arretierelement umfassen, das in die Verzahnung zumindest eines Getriebeteils eingreift.

20. Lenkung nach Anspruch 17 oder 18, **dadurch gekennzeichnet, dass** die Blockiermittel umfassen ein Einführelement (49), das mit Aussparungen versehen und mit einem ersten Getriebeteil fest verbunden ist, sowie ein Arretierelement (39), das mit einem Vorsprung (41) versehen ist und an einem zweiten Getriebeteil dergestalt drehbar angebracht ist, dass der Vorsprung (41) in eine der Aussparungen eingreifen kann

21. Lenkung nach Anspruch 17 oder 18, **dadurch gekennzeichnet, dass** die Blockiermittel umfassen einen Arm (34), der mit einem Getriebeteil fest verbunden ist, ein auf dem freien Ende des Arms bewegbar angeordnetes Arretierelement (35, 43), dessen eine Seite mit mindestens einem Vorsprung versehen ist, sowie ein Einführelement (36), das dem Arretierelement radial gegenüberliegt, mit dem Gehäuse (1) fest verbunden ist und dessen dem Arretierelement (35, 43) zugewandt Seite mit Aussparungen versehen ist, in die sich der Vorsprung des Arretierelements (35, 43) einführen lässt, um das zugehörige Getriebeteil zu blockieren.

22. Lenkung nach Anspruch 21, **dadurch gekennzeichnet, dass** das Arretierelement (35) in einem Winkel zur Drehachse (32) des zugehörigen Getriebeteils in einer Ebene durch die Drehachse (32) bewegbar ist.

23. Lenkung nach Anspruch 21, **dadurch gekennzeichnet, dass** das Arretierelement (35) um einen Stift (34a) herum schwenkbar ist, der im Wesentlichen senkrecht zur Achse des zugehörigen Getriebeteils steht.

24. Lenkung nach einem der Ansprüche 20 bis 23, **dadurch gekennzeichnet, dass** der Vorsprung (41) und/oder die Aussparungen auf einer Seite so abgeschrägt sind, dass **dadurch**, dass im Wesentlichen in Richtung der abgeschrägten Seite eine Kraft ausgeübt wird, sich das Arretierelement (39) aus der Arretierposition heraus bewegt.

25. Lenkung nach einem der Ansprüche 19 bis 24, **dadurch gekennzeichnet, dass** eine Rückzugfeder (42) das Arretierelement (35, 43) zum Einführelement (36) hin bewegt.

26. Lenkung nach einem der Ansprüche 17 bis 25, **dadurch gekennzeichnet, dass** zum Herausbewegen der Blockiermittel aus der Blockierposition ein Betätigungselement (38) vorgesehen ist.

27. Lenkung nach einem der Ansprüche 13 bis 26, **dadurch gekennzeichnet, dass** an jedem der Getriebeteile ein Arm (48, 49) angebracht ist, der einen Winkel mit dem mit dem betreffenden Getriebeteil verbundenen Lenkungsteil bildet, wobei am freien Ende des Arms (48, 49) ein Stützelement (50, 51) angeordnet ist.

28. Lenkung nach Anspruch 27, **dadurch gekennzeichnet, dass** das Stützelement (50, 51) am freien Ende des Arms einstellbar angeordnet ist.

29. Lenkung nach einem der Ansprüche 13 bis 28, **dadurch gekennzeichnet, dass** die Lenkung am freien Ende einer Lenkspindel (52) einstellbar befestigt ist, wobei sich die Lenkung um eine Drehachse drehen lässt, die im Wesentlichen senkrecht zur Achse der Lenkspindel steht.

30. Fahrrad mit einer Lenkung nach einem der Ansprüche 13 bis 29.

## Revendications

1. Dispositif de transmission comprenant :
au moins deux composants de transmission rotatifs (2, 3 ; 8, 9), chaque composant de transmission étant muni d'une denture (4, 5 ; 10, 11) disposée sur au moins une partie de la circonférence du composant de transmission, les dentures respectives engrenant l'une avec l'autre ;
un boîtier (1) dans lequel sont placés les composants de transmission (2, 3 ; 8, 9) ; et
un palier pour supporter les composants de transmission (2, 3 ; 8, 9) dans le boîtier,
**caractérisé en ce qu'**au moins une partie des composants de transmission (2, 3, 8, 9, 22, 23) est en contact avec le boîtier (1) dans le but de former, avec le boîtier (1), le palier, et **en ce que** des moyens sont prévus pour régler, en éliminant au moins substantiellement, le jeu relatif entre les dentures (10, 11) des composants de transmission (2, 3, 8, 9, 22, 23).

2. Dispositif de transmission selon la revendication 1, **caractérisé en ce que** les moyens servant à régler le jeu entre les dentures (10, 11) des composants de transmission (2, 3, 8, 9, 22, 23) sont formés par le boîtier (1), la forme du boîtier (1) étant telle que, lorsque les composants de transmission (2, 3, 8, 9, 22, 23) sont logés dans le boîtier (1), le boîtier (1) exerce une force de rappel sur les composants de transmission (2, 3, 8, 9, 22, 23), ce qui a pour résultat que les composants de transmission (2, 3, 8, 9, 22, 23) engrènent l'un avec l'autre sans jeu.

3. Dispositif de transmission selon la revendication 1 ou 2, **caractérisé en ce qu'**une partie de la circonférence de chaque composant de transmission (2, 3, 8, 9, 22, 23) est en contact avec une partie de la surface intérieure du boîtier (1), les surfaces de contact entre chaque composant de transmission (2, 3, 8, 9, 22, 23) et le boîtier (1) formant le palier.

4. Dispositif de transmission selon la revendication 1, 2 ou 3, **caractérisé en ce que** la surface intérieure du boîtier (1) est munie d'une garniture réduisant les frottements (45), par exemple une garniture en plastique.

5. Dispositif de transmission selon l'une des revendications 1 à 4, **caractérisé en ce que** la denture d'au moins un composant de transmission (8, 9, 22, 23) s'étend sur une partie de la circonférence du composant de transmission (8, 9, 22, 23), et **en ce qu'**une partie non dentée de la circonférence du composant de transmission (8, 9, 22, 23) porte contre le boîtier.

6. Dispositif de transmission selon la revendication 5, **caractérisé en ce qu'**un segment de palier est disposé dans le boîtier (1) dans le but de supporter le composant de transmission (8, 9, 22, 23).

7. Dispositif de transmission selon l'une des revendications précédentes, **caractérisé en ce que** les moyens servant à régler, en éliminant au moins substantiellement, le jeu entre les dentures (10, 11) des composants de transmission (2, 3, 8, 9, 22, 23) sont également conçus pour régler, en éliminant au moins substantiellement, le jeu entre les composants de transmission (2, 3, 8, 9, 22, 23) et le boîtier (1).

8. Dispositif de transmission selon l'une des revendications précédentes, **caractérisé en ce que** le boîtier (1) comprend une bande qui porte au moins partiellement contre la circonférence des composants de transmission (2, 3, 8, 9) et sur laquelle sont disposés deux rebords bridés s'étendant vers l'extérieur (14, 15, 14a, 15a), lesquels rebords bridés définissent entre eux un espace qui est sensiblement parallèle aux axes des composants de transmission (2, 3, 8, 9), les rebords bridés (14, 15, 14a, 15a) pouvant être rapprochés l'un de l'autre au moyen d'un boulon (16, 16a, 16b) dans le but d'ajuster le jeu entre les composants de transmission (2, 3, 8, 9) et entre les composants de transmission (2, 3, 8, 9) et le boîtier (1).

9. Dispositif de transmission selon l'une des revendications 1 à 7, **caractérisé en ce qu'**au moins un composant de transmission (8, 9, 22, 23) est rétréci à la circonférence, sur une partie prédéterminée, la partie rétrécie portant contre une partie complémentaire du boîtier (1).

10. Dispositif de transmission selon la revendication 9, **caractérisé en ce qu'**au moins un composant de transmission (8, 9) ayant une partie rétrécie peut être déplacé au moyen d'un boulon (18, 20) qui fait saillie à travers le boîtier (1) et est en prise avec un filetage intérieur d'un trou prévu dans le composant de transmission (8, 9) en question, de telle manière que le jeu entre les composants de transmission (8, 9) peut être éliminé.

11. Dispositif de transmission selon l'une des revendications 1 à 7, **caractérisé en ce que** le boîtier (1) est constitué d'au moins deux parties, qui peuvent être rapprochées l'une de l'autre.

12. Dispositif de transmission selon l'une des revendications 1 à 11, **caractérisé en ce qu'**au moins une entretoise est placée entre les composants de transmission (2, 3, 8, 9, 22, 23).

13. Ensemble de direction, en particulier guidon (29) de bicyclette comprenant au moins deux parties (30, 31, 53, 54) d'ensemble de direction et un dispositif de transmission conforme à l'une des revendications 1 à 12, dans lequel chaque partie d'ensemble de direction est reliée à un composant de transmission dudit dispositif de transmission.

14. Ensemble de direction selon la revendication 13, **caractérisé en ce que** chaque partie (53, 54) d'ensemble de direction est connectée de manière réglable à la roue dentée associée, la partie (53, 54) d'ensemble de direction pouvant tourner autour de l'axe de la partie d'ensemble de direction en question à l'endroit de la connexion.

15. Ensemble de direction selon la revendication 14, **caractérisé en ce que** chaque partie (53, 54) d'ensemble de direction est munie d'un élément de connexion (57, 58) pour relier de manière réglable la partie d'ensemble de direction au composant de transmission associé, l'élément de connexion (57, 58) étant inséré dans la partie d'ensemble de direction de manière telle qu'une extrémité est située à l'extérieur de la partie d'ensemble de direction, laquelle extrémité se met en prise autour d'un cône de fixation (60) du composant de transmission associé.

16. Ensemble de direction selon la revendication 15, **caractérisé en ce qu'**un trou muni d'un filetage est formé dans l'élément de connexion (57, 58), et **en ce qu'**un trou est formé dans le cône de fixation (60), par lequel trou un boulon (59) peut être inséré qui se met en prise avec le filetage du trou de l'élément de connexion (57, 58).

17. Ensemble de direction selon l'une des revendications 13 à 16, **caractérisé en ce que** des moyens de blocage sont prévus pour bloquer un mouvement de rotation d'un composant de transmission.

18. Ensemble de direction selon la revendication 17, **caractérisé en ce que** les moyens de blocage sont conçus pour bloquer le mouvement de rotation dans un sens de rotation.

19. Ensemble de direction selon la revendication 17 ou 18, **caractérisé en ce que** les moyens de blocage comprennent un élément de verrouillage qui se met en prise avec la denture d'au moins un composant de transmission.

20. Ensemble de direction selon la revendication 17 ou 18, **caractérisé en ce que** les moyens de blocage comprennent un élément d'insertion (40) qui est muni d'évidements et est connecté de manière fixe à un premier composant de transmission, ainsi qu'un élément de verrouillage (39) qui est muni d'une protubérance (41) et est fixé à rotation à un deuxième composant de transmission, de manière telle que la protubérance (41) peut passer dans l'un des évidements.

21. Ensemble de direction selon la revendication 17 ou 18, **caractérisé en ce que** les moyens de blocage comprennent un bras (34) qui est connecté de manière fixe à un composant de transmission, un élément de verrouillage (35, 43) qui est disposé de manière mobile sur une extrémité libre du bras et dont un côté est muni d'au moins une protubérance, ainsi qu'un élément d'insertion (36) qui se trouve radialement opposé à l'élément de verrouillage, est placé dans le boîtier (1), est connecté de manière fixe à celui-ci et dont le côté tourné vers l'élément de verrouillage (35, 43) est muni d'évidements, dans lesquels la protubérance de l'élément de verrouillage (35, 43) peut être insérée afin de bloquer le composant de transmission associé.

22. Ensemble de direction selon la revendication 21, **caractérisé en ce que** l'élément de verrouillage (35) peut être déplacé pour former un angle avec l'axe de rotation (32) du composant de transmission associé, dans un plan traversant l'axe de rotation (32).

23. Ensemble de direction selon la revendication 21, **caractérisé en ce que** l'élément de verrouillage (35) peut pivoter autour d'un axe (34a) qui est sensiblement perpendiculaire à l'axe du composant de transmission associé.

24. Ensemble de direction selon l'une des revendications 20 à 23, **caractérisé en ce que** la protubérance (41) et/ou les évidements sont chanfreinés sur un côté, de manière telle qu'en exerçant une force sensiblement orientée dans la direction du côté chanfreiné, l'élément de verrouillage (39) sort d'une position de verrouillage.

25. Ensemble de direction selon l'une des revendications 19 à 24, **caractérisé en ce qu'**un ressort de rappel (42) déplace l'élément de verrouillage (35, 43) vers l'élément d'insertion (36).

26. Ensemble de direction selon l'une des revendications 17 à 25, **caractérisé en ce qu'**un élément d'actionnement (38) est prévu pour mettre les moyens de blocage hors d'une position de blocage.

27. Ensemble de direction selon l'une des revendications 13 à 26, **caractérisé en ce qu'**un bras (48, 49) est attaché à chaque composant de transmission, lequel bras (48, 49) forme un angle avec la partie d'ensemble de direction qui est connectée au composant de transmission en question, un élément de support (50, 51) étant placé sur l'extrémité libre du bras (48, 49).

28. Ensemble de direction selon la revendication 27, **caractérisé en ce que** l'élément de support (50, 51) est placé de manière réglable sur l'extrémité libre du bras (48, 49).

29. Ensemble de direction selon l'une des revendications 13 à 28, **caractérisé en ce que** l'ensemble de direction est fixé de manière réglable à une extrémité libre d'un axe de pivot de direction (52), l'ensemble de direction pouvant tourner autour d'un axe de rotation qui est sensiblement perpendiculaire à l'axe de l'axe de pivot de direction.

30. Bicyclette munie d'un ensemble de direction conforme à l'une des revendications 13 à 29.
